# EUROPÄISCHE PATENTSCHRIFT

(11) **EP 4 428 065 B1**
(45) Veröffentlichungstag und Bekanntmachung des Hinweises auf die Patenterteilung: **26.08.2026**
(21) Anmeldenummer: 24158506.6
(22) Anmeldetag: 20.02.2024
(51) Int. Cl.: B65G 17/06, B65G 17/08

(54) **KETTENGLIED FÜR EINE KURVENGÄNGIGE FÖRDERKETTE, KURVENGÄNGIGE FÖRDERKETTE UND TRANSFERSYSTEM MIT KURVENGÄNGIGER FÖRDERKETTE**
CHAIN LINK FOR A CURVE-MOVING CONVEYOR CHAIN, CURVE-MOVING CONVEYOR CHAIN, AND TRANSFER SYSTEM HAVING CURVE-MOVING CONVEYOR CHAIN
MAILLON DE CHAÎNE POUR UNE CHAÎNE TRANSPORTEUSE À COURBES, CHAÎNE TRANSPORTEUSE À COURBES ET SYSTÈME DE TRANSFERT AVEC CHAÎNE TRANSPORTEUSE À COURBES

(30) Priorität: 06.03.2023 DE 102023201990
(43) Veröffentlichungstag der Anmeldung: 11.09.2024
(73) Patentinhaber: Robert Bosch GmbH, 70442 Stuttgart (DE)
(72) Erfinder: Gruber, Johannes, 71154 Nufringen (DE); Grechanyy, Vadim, 71229 Leonberg (DE); Bender, Fabian, 70188 Stuttgart (DE)

(56) Entgegenhaltungen:
- EP-A2- 1 266 846
- WO-A1-2012/068695
- WO-A1-99/52798
- DE-A1- 3 701 772

## Beschreibung

### Technisches Gebiet

Die Erfindung betrifft ein Kettenglied für eine kurvengängige Förderkette für ein Transfersystem gemäß dem Oberbegriff des Anspruchs 1, eine kurvengängige Förderkette für ein Transfersystem gemäß Anspruch 10, sowie ein Transfersystem mit einer kurvengängigen Förderkette gemäß Anspruch 11.

Ein Transfersystem dient dem effizienten Transport von Gut, beispielsweise einem Werkstück oder einem Produkt, und hat eine Schienen- oder Rahmenstruktur mit wenigstens einem daran in Transferrichtung umlaufenden Fördermittel auf dem das Gut abgestützt und mitgenommen wird. Als Fördermittel sind bandförmige Zugträger, und alternativ Förderketten mit plattenförmigen Kettengliedern in Gebrauch.

Förderketten haben den Vorteil, dass sie aufgrund ihrer gliedrigen Bauweise enge Kurvenradien in der Förderebene ermöglichen. Um eine Koppelfunktion untereinander und eine Tragfunktion bezüglich des zu fördernden Gutes optimiert erfüllen zu können, sind Kettenglieder häufig mehrteilig ausgebildet. Die Basis bildet ein mit benachbarten Grundkettengliedern koppelbares Grundkettenglied. Oberseitig am Grundkettenglied ist eine Förderplatte oder Mitnahmeplatte angeordnet, wobei zwischen den Förderplatten keine relevanten Zug- oder Querkräfte übertragen werden können. Diese Kraftübertragung erfolgt über die gelenkig gekoppelten Grundkettenglieder. Das jeweilige Gelenk erlaubt dabei die Verschwenkung um wenigstens zwei Achsen. Eine erste der Achsen erstreckt sich parallel zur Förderebene und quer zur Förderrichtung und ermöglicht die Umlenkung der Förderkette an einem Umkehrpunkt des Transfersystems, an dem die Förderkette zurückgeführt wird. Eine zweite Achse des Gelenks, die sich normal zur Förderebene erstreckt, ermöglicht die Kurvengängigkeit der Kettenglieder in der Förderebene. Das auf die Anmelderin zurückgehende Patent EP 275 09 93 B1 zeigt den strukturellen Aufbau eines solchen Grundkettengliedes.

Die ebenso auf die Anmelderin zurückgehende Druckschrift DE 102 011 112 398 A1 zeigt eine mit dem Grundkettenglied verrastete Förderplatte. Die flächige Unterseite der Förderplatte hat, bezogen auf die Förderebene, einen im wesentlichen rechteckigen Grundquerschnitt, wohingegen die Oberseite den Grundquerschnitt eines flach in Förderrichtung weisenden Pfeiles mit parallelen Umfangsseiten hat. Durch die unterschiedlichen Grundquerschnitte ergibt sich an jedem Kettenglied links und rechts der Mitte, stirnseitig eine Stufe und rückseitig eine Überdachung, jeweils mit hin zur Randseite zunehmender Tiefe, wodurch eine radial innenseitige Einfächerung der Förderplatten untereinander/übereinander und so die Kurvengängigkeit ermöglicht wird. Die randseitige Führung der jeweiligen Förderplatte erfolgt über unterseitig auskragende, nach außen abgestellte L-Profile.

Ein auf diesem Konzept basierendes Transfersystem ist das *Vario Flow Plus* der aus dem Produktportfolio der Anmelderin, wobei hier Förderplatten mit unterschiedlichsten Grund- und Randquerschnitten gezeigt sind. Insbesondere sind auch Förderplatten gezeigt, die eine stirnseitige und rückseitige Verzahnung benachbarter Förderplatten ermöglichen.

Die Druckschrift US 548 90 20 zeigt eine Förderkette mit stirnseitiger und rückseitiger Verzahnung von in Förderrichtung aufeinanderfolgenden Kettengliedern.

Die Druckschrift WO 995 27 98 A1 zeigt das Konzept einer Förderkette mit stirnseitiger und rückseitiger Verzahnung der Förderplatten der Kettenglieder, wobei die Zahnzwischenräume einer der beiden Seiten jeder Förderplatte, oder des Kettenglieds, sollte Platte und Grundkörper einteilig hergestellt sein, eine bis an die Kopflinie der dortigen Zähne heranreichende Unterfütterung aufweisen. Die rückseitigen Zähne weisen eine daran angepasste, unterseitige Aussparung auf, sodass die in einer Kurve radial innen angeordneten, rückseitigen Zähne in die sich oberhalb der Unterfütterung ergebenden Lücken der rückseitig anschließenden Förderplatte einfahren können. Durch diese Unterfütterung kann das Eindringen eines Gegenstandes oder von Gliedmaßen in Spalte zwischen den Förderplatten verhindert, oder zumindest das Risiko hierfür minimiert, werden.

Ein ähnliches Konzept der einseitigen, vollständigen Unterfütterung von randseitigen Zahnlücken zeigt das erloschene Patent EP 068 08 98 B1.

Das Patent EP 264 32 45 B1 zeigt eine Förderplatte mit in der Förderebene gebogenen, stirnseitigen und rückseitigen Zähnen. Auch hier ist die Unterfütterung einseitig und vollständig.

Aus der DE 37 01 772 A1 ist ein Kettenglied gemäß dem Oberbegriff des Anspruchs 1 bekannt, dessen Förderplatte ausschließlich von einer Vielzahl von Zähnen gebildet wird. Die Förderplatte bildet keine zusammenhängende, ebene Fläche, auf welcher das zu fördernde Gut aufliegt. Damit sich dennoch ein weitgehend vollflächige Abstützung des zu fördernden Guts ergibt, ist zwischen in der Förderkette benachbart angeordneten Förderplatten ein verzahnter, kurvengängiger Eingriff vorgesehen. Die Zähne werden von einem Trägerteil zusammengehalten, wobei die die Zähne des einen Kettenglieds, dass Trägerteil des benachbarten Kettenglieds überragen können. Das Trägerteil bildet daher einen teilverfüllten Zahngrund. Die Zähne haben an ihrer Unterseite jeweils eine Aussparung in Form einer Abschrägung. Der Nachteil dieses Kettenglieds besteht darin, dass dessen Breite bei konstant angenommenen Kurvenradius der Förderkette nur sehr eingeschränkt vergrößert werden kann. Die entsprechende Breite des Kettenglieds gemäß der vorliegenden Erfindung kann demgegenüber größer gewählt werden, wobei an den Seitenrändern des Kettenglieds dennoch eine weitgehend lückenfreie Auflage für das Fördergut vorahnden ist, wobei die Lücken insbesondere so klein sind, dass eine Verletzungsgefahr für den Benutzer minimiert ist.

Aus der EP 1 266 846 A2 ist ein Kettenglied bekannt, bei welchem die entsprechende Förderkette nur sehr große Kurvenradien ausführen kann. Um die Auflagfläche für das zu fördernde Gut zu vergrößern, sind an der Unterseite des Kettenglieds Senken ausgebildet, in welche benachbarte Zähne eingreifen können.

Grundsätzlich wird mittels der Unterfütterung der oben genannten Zahnlücken verhindert, dass ein Mensch bei laufendem Transfersystem zwischen die Zähne greifen kann. Die Zähne auf der gegenüberliegenden Seite der Förderplatte sind in der Folge vergleichsweise lang und damit auch instabil. Je breiter die Förderplatte ausgebildet ist, umso größer ist dabei das Problem der Instabilität. Das liegt darin begründet, dass zum Erreichen der Kurvengängigkeit die Zahnlücken mit zunehmendem Quer- oder Radialabstand vom Mittelpunkt der Förderplatte immer tiefer und die Zähne selbst immer länger werden müssen. Randseitig weit außen angeordnete Zähne sind dann besonders lang/dünn. Bei Bruch eines Zahnes ist eine gewisse Verletzungsgefahr möglich.

Demgegenüber liegt der Erfindung die Aufgabe zu Grunde, ein Kettenglied für eine Förderkette für ein Transfersystem zu schaffen, das für eine vorgegebene Breite und Kurvengängigkeit stabiler ist. Eine weitere Aufgabe ist es, eine Förderkette und ein Transfersystem mit Förderkette zu schaffen, die/das bei vorgegebener Breite und Kurvengängigkeit eine höhere Stabilität aufweist.

Die erste Aufgabe wird gelöst durch ein Kettenglied mit den Merkmalen des Anspruchs 1, die zweite Aufgabe durch eine Förderkette mit den Merkmalen des Anspruchs 10 und die dritte Aufgabe durch ein Transfersystem mit den Merkmalen des Anspruchs 11.

Vorteilhafte Weiterbildungen der jeweiligen Erfindung sind Gegenstand der jeweiligen Unteransprüche.

Ein Kettenglied für eine Förderkette oder einer kurvengängigen Förderkette, insbesondere die Förderkette eines Transfersystems, hat ein Grundkettenglied, das zur Kopplung mit anderen Grundkettengliedern der Förderkette vorgesehen und ausgestaltet ist. Ein Grundkettenglied ist im Sinne der Offenbarung ein mit einem Antriebsrad oder einer Antriebswelle, oder allgemein einer Antriebskraftraftübertragung des Transfersystems, in Eingriff, insbesondere in Kraft-, Form- und/oder Reibschluss bringbarer Abschnitt des Kettengliedes. Vorzugsweise hat das Grundkettenglied stirn- und rückseitig je einen Gelenkabschnitt, über den es mit dem in der Förderkette nächsten Grundkettenglied gelenkig koppelbar ist. Die Gelenkabschnitte sind vorzugsweise so ausgestaltet, dass wenigstens zwei Rotationsachsen ausgebildet sind, die eine Umlenkung der Förderkette an deren Umkehrpunkt und eine Umlenkung der Förderkette an einer Kurve des Transfersystems - das heißt, Kurvengängigkeit - ermöglichen. Am Grundkettenglied ist offenbarungsgemäß eine Förder- oder Mitnahmeplatte angeordnet, vorzugsweise verrastet, die vorgesehen und ausgestaltet ist, an ihrer Oberseite ein zu förderndes Gut zu stützen und in Förderrichtung mitzunehmen. Die Förderplatte ist alternativ vorzugsweise einstückig mit dem Grundkettenglied gebildet. An einer in eine Förderrichtung weisenden Stirnseite der Förderplatte und an einer in eine Gegenrichtung weisenden Rückseite der Förderplatte kragen jeweils Zähne aus, die ausgestaltet und angeordnet sind, zwischen in der Förderkette benachbarten Förderplatten einen verzahnten, kurvengängigen Eingriff auszubilden, oder zu kämmen. Erfindungsgemäß ist sowohl an der Stirnseite, als auch an der Rückseite wenigstens ein mit Bezug zur Förderrichtung randseitig zum Zahn angeordneter Zahngrund von einem Steg zumindest teilverfüllt. In anderen Worten: eine Lücke zwischen zwei randseitig angeordneten Zähnen, jeweils an der Stirn- und an der Rückseite, ist von einem Steg zumindest teilverfüllt.

Auf diese Weise ist eine vom Zahngrund gebildete Lücke verkleinert, sodass ein Eingriff einer Person in den Zahngrund während des Betriebes erschwert - vorzugsweise verhindert - ist. Zugleich ist eine freie Länge der den Zahngrund ausbildenden Zähne verringert und diese Zähne sind bei einer vorgegebenen Länge - bemessen vom Zahngrund ausgehend - und Breite - bemessen quer zur Förderrichtung - mechanisch stabiler, als mit einem unverfüllten Zahngrund.

Die Teilverfüllung ist in bevorzugter Ausgestaltung derart realisiert, dass sich der wenigstens eine, stirnseitige Steg mit Bezug zur Förderrichtung und/oder der wenigstens eine, rückseitige Steg mit Bezug zur Gegenrichtung, unterhalb einer Kopflinie oder -kurve derjenigen Zähne erstreckt, zwischen den der Zahngrund ausgebildet ist. Als Kopflinie ist offenbarungsgemäß eine Verbindungslinie oder -kurve zu verstehen, die Scheitelpunkte oder Spitzen der den Zahngrund bildenden Zähne verbindet.

Gemäß einer Alternative der Erfindung ist die Teilverfüllung derart realisiert, dass vom wenigstens einen, stirnseitigen Steg oder dem wenigstens einen, rückseitigen Steg eine Senke in der Oberseite ausgebildet ist. Gemäß einer anderen Alternative der Erfindung ist vom jeweiligen Steg eine Senke in einer Unterseite der Förderplatte ausgebildet.

Erfindungsgemäß ist an wenigstens einem der Zähne eine Aussparung an einer Unterseite der Förderplatte ausgebildet. Vorzugsweise ist diese Aussparung vorgesehen und ausgestaltet, bei Eingriff dieses Zahnes in einen gegenüberliegenden, teilverfüllten Zahngrund einer benachbarten Förderplatte, den dortigen Steg kollisionsfrei zu überdecken. Alternativ oder ergänzend kann eine solche Aussparung an der Oberseite ausgebildet sein, wenn der Steg der benachbarten Förderplatte eine Senke in deren Unterseite bildet. Dabei ist natürlich auf Kollisionsfreiheit zu achten, sodass die unterseitige Aussparung der oberseitig ausgebildeten Senke, beziehungsweise die oberseitige Aussparung der unterseitig ausgebildeten Senke zugeordnet ist.

Um einen präzisen Eingriff zu ermöglichen, sind gemäß der Erfindung die Senke der Förderplatte und die ihr zugeordnete Aussparung am Zahn der, bei bestimmungsgemäß ausgebildeter Förderkette, benachbart angeordneten Förderplatte im Wesentlichen komplementär ausgebildet.

Vorzugsweise findet in der Förderkette eine Vielzahl des jeweils gleichen Kettengliedes mit gleicher Förderplatte, Verwendung.

Gemäß einer Weiterbildung, insbesondere, um die Förderkette aus einer Vielzahl baugleicher Kettenglieder aufbauen zu können, fluchten die Zähne der Stirnseite jeweils mit einem der Zahngründe der Rückseite, oder umgekehrt.

In anderen Worten: die Zähne der Stirnseite sind gegen die Zähne der Rückseite, um einen halben Zahnabstand, quer zur Förderrichtung versetzt, angeordnet.

In noch anderen Worten: die Zahngründe der Stirnseite sind gegen die Zahngründe der Rückseite, um einen halben Zahngrundabstand, quer zur Förderrichtung versetzt, angeordnet.

Um in jedem Fall Kollisionsfreiheit im Eingriff sicherzustellen, weisen Querschnitte der Senke und der Aussparung in Förderrichtung und quer dazu einen Offset auf. Dieser kann konstant oder variabel sein.

Um Verhakungen beim Eingriff der Zähne in den Zahngrund zu vermeiden und insbesondere um eine einfache Fertigung der Förderplatte mit möglichst wenig Bearbeitungsschritten zu ermöglichen, insbesondere mittels Urformen, insbesondere Spritzguss, weist die Senke und/oder die Aussparung eine Entformschräge in Förderrichtung und/oder Gegenrichtung auf. In anderen Worten: Die Stirnseite und die Rückseite sind ohne Hinterschnitt bezüglich einer Entformung in Förder- und Gegenrichtung ausgestaltet.

Vorzugsweise hat die Förderplatte einen sich in Förderrichtung und quer dazu erstreckenden Kernabschnitt, aus dem die Zähne oder zumindest Zahnabschnitte oder Zahnköpfe auskragen, und in den zumindest die teilverfüllten Zahngründe eingebuchtet sind. Das Auskrage und Einbuchten ist dabei an der Stirnseite mit Bezug zur Förderrichtung, an der Rückseite mit Bezug zur Gegenrichtung definiert.

Der Kernabschnitt ist vorzugsweise als eine Platte oder ein Quader ausgebildet. Vorzugsweise ist er in Förderrichtung kürzer als quer zur Förderrichtung und erstrecke sich beidseitig des Grundgelenks hin zu den Randseiten.

Die Quaderform bedingt einen reckeckigen Grundquerschnitt. Ausgenommen aus diesem Grundquerschnitt sind, wie oben erwähnt, die auskragenden Zähne oder Zahnköpfe und die einbuchtenden Zahngründe. Die Quaderform vereinfacht die Umlenkung des Kettengliedes und damit der Förderkette am Umkehrpunkt. Zudem stellt der so geformte Kernabschnitt einen Balken mit hoher Stabilität dar.

In einer bevorzugten Weiterbildung sind von Scheitelpunkten oder Scheitellinien der Stege Abschnitte einer rechteckigen Kontur gebildet, vorzugsweise in einer Ebene, die sich parallel zur Oberseite oder parallel zu einer Unterseite der Förderplatte erstreckt. Insbesondere stellt diese rechteckige Kontur einen Querschnitt des oben genannten Kernabschnitts, der Platte oder des Quaders dar.

Grundlegend ist bei einem kurvengängigen Kettenglied der Eingriffshub eines randseitigen Zahnes der Förderplatte in den ihm zugeordneten Zahngrund der benachbarten Förderplatte größer als der Eingriffshub eines mittiger angeordneten Zahnes. Der Hub ist dabei Eingriffshub abhängig vom Kurvenradius und der Breite der Förderplatte. Um den Eingriff zu gewährleisten, kragen daher die randseitiger angeordneten der Zähne mit Bezug zur Förderrichtung länger aus, als die mittiger angeordneten. Der gleiche, qualitative Zusammenhang gilt für die Zahngründe: Je randseitiger diese angeordnet sind, umso tiefer sind sie ausgebildet, oder umgekehrt, je mittiger sie angeordnet sind, umso flacher können sind sie ausgebildet sein.

In einer bevorzugten Weiterbildung ist wenigstens ein mittig angeordneter Zahngrund unverfüllt, das heißt er weist keinen Steg auf, was insbesondere darin begründet ist, dass die ihn ausbildenden Zähne aufgrund ihrer mittigen Lage vergleichsweise kurz sind.

Gemäß einer Weiterbildung ist ein Abschnitt der rechteckigen Kontur vom wenigstens einen unverfüllten Zahngrund gebildet.

Gemäß einer bevorzugten Weiterbildung ist ein Querschnitt des Kernabschnitts in Förderrichtung und in Gegenrichtung abschnittsweise von den Stegen und unverfüllten Zahngründen begrenzt. In anderen Worten: Von Kammlinien oder -punkten der Stege und der unverfüllten Zahngründe sind Abschnitte oder Punkte einer Geraden ausgebildet.

In einer Weiterbildung ist eine stirnseitige Kopflinie, entlang der Köpfe oder Scheitelpunkte der stirnseitigen Zähne angeordnet sind, in Förderrichtung konkav ausgebildet. Ergänzend oder alternativ ist eine rückseitige Kopflinie, entlang der Köpfe der rückseitigen Zähne angeordnet sind, in Gegenrichtung konkav ausgebildet. Sind beide konkav, so ergibt sich eine taillierte oder sanduhrförmige Anordnung der beiden Kopflinien zueinander. Vorzugsweise sind die Kopflinien symmetrisch, insbesondere bezüglich einer von einer Querachse und einer Hochachse der Förderplatte aufgespannten Mittelebene der Förderplatte. Ein Grad der Taillierung ist dabei abhängig von einem von der Förderkette und ihren Kettengliedern darzustellenden Kurvenradius.

Die konkave Kopflinie ist insbesondre aus Kurven oder Geraden zusammengesetzt oder sie ist von einem Ellipsenabschnitt, von einer andersartigen, gekrümmten Regelgeometrie oder von einer Annäherung an eine solche gebildet.

Vorzugseise sind randseitigere der Zähne in Förderrichtung länger und/oder Zahngründe sind tiefer, als mittigere der Zähne und/oder Zahngründe.

Vorzugsweise nimmt eine Länge der Zähne, mit der sie auskragen von einer Mitte hin zur Randseite der Förderplatte stetig, sprunghaft und/oder stufig zu.

Gemäß einer Weiterbildung ist eine stirnseitige Grundlinie, entlang der die stirnseitigen Zahngründe oder deren Tiefpunkte angeordnet sind, mit einer rückseitigen Grundlinie, entlang der die rückseitigen Zahngründe oder deren Tiefpunkte angeordnet sind, als eine Ausbauchung oder Linsenkontur ausbildet.

Vorzugsweise ist die Ausbauchung oder Linsenkontur mit Bezug bezüglich einer von einer Querachse und einer Hochachse der Förderplatte aufgespannten Mittelebene symmetrisch.

Um den kurvengängigen, kollisionsfreien Eingriff der Zähne in die Zahngründe der benachbarten Förderplatte zu ermöglichen, sind gemäß einer Weiterbildung Randseiten von zumindest einigen der der Zähne gegen eine von der Förderrichtung und einer Hochachse der Förderplatte aufgespannte Mittelebene zumindest abschnittsweise angewinkelt.

Vorzugsweise ist diejenige Randseite des Zahnes, die zum außen oder randseitig benachbarten Zahngrund weist, parallel zur letztgenannten Mittelebene, wohingegen die andere Randseite des Zahnes, die zum in Richtung Grundgelenk benachbart angeordneten Zahngrund weist, von der Förderrichtung, insbesondere mit spitzem Winkel, abgewinkelt ist. Ein Wert dieses Winkels ist vorzugsweise 5 bis 15°, insbesondere 10°.

Vorzugsweise ist der Zahnkopf schmaler als ein Zahnfuß des betreffenden Zahnes, was insbesondere über die vorbeschriebene, abgewinkelte Randseite erreicht wird. Der Kopf des Zahnes ist somit keilförmig, insbesondere kann er so in einer Kurve kollisionsfrei in Eingriff gebracht werden.

Vorzugsweise sind alle abgewinkelten Randseiten mit gleichem Winkel oder Winkelwert abgewinkelt.

Vorzugsweise weisen alle abgewinkelten Randseiten der Zähne, bezogen auf die Förderrichtung, eine gleiche Länge auf. Ausgenommen hiervon sind natürlich solche Zähne, die eine zu geringe Länge aufweisen. Hier erstreckt sich vorzugsweise die abgewinkelte Randseite über die gesamte Länge des Zahnes, erreicht aber nicht die Länge der abgewinkelten Randseiten derjenigen Zähne, die eine größere Länge aufweisen.

Durch die abgewinkelte Randseite ist selbst bei großer Breite der Förderplatte eine schlanke Zahnform möglich, was den primären Vorteil hat, dass eine maximale Spaltbreite während des Betriebs der Förderkette auf ein oberes Limit, vorzugsweise von etwa 8mm, begrenzbar oder begrenzt ist, was den menschlichen Eingriff zwischen zwei Förderplatten und die damit verbundene Unfallgefahr verringert. Mit herkömmlichen, trapezförmigen Zahnformen ist diese Sicherheitsanforderung bei großer Förderplattenbreite nicht mehr erfüllbar.

Zwar ermöglichen gebogene Zähne, wie sie der diskutierte Stand der Technik zeigt, ebenfalls kleine Spaltmaße. Allerdings können bei gleicher Stärke bogenförmig ausgeführte Zahne leichter brechen als gerade ausgeführte, wobei dann bei Bruch ein notwendiges Gleiten des Gutes entlang der Kettenoberfläche erschwert wird, wenn das Gut beispielsweise absichtlich oder unabsichtlich aufgehalten wird. Um hier Zerstörung und Ausfall der Förderkette, des Gutes und/oder des Transfersystems zu vermeiden, muss die Förderkette stets in der Lage sein, unter dem (blockierten) Gut weiterzulaufen, was mit der offenbarungsgemäß Formgebung der Förderplatte erreicht wird.

In einer bevorzugten Weiterbildung ist ein randseitigster der Zähne zur Auflage auf einer randseitigen Gleitleiste des Transfersystems vorgesehen und ausgestaltet. Vorzugsweise ist er kürzer, als sein an gleicher Seite der Förderplatte, insbesondere der Stirnseite oder Rückseite, benachbart angeordneter Zahn.

Um Material einzusparen und/oder um die Fertigung zu erleichtern, wobei für die Fertigung optimalerweise eine über die gesamte Förderplatte konstante Wandstärke/- dicke wünschenswert ist, weist in einer Weiterbildung eine Unterseite der Förderplatte eine Tasche oder Ausnehmung auf. Diese erstreckt sich vorzugsweise von mittig, das aus einem Bereich oder Nahbereich des Grundkettengliedes, nach randseitig, das heißt in Richtung hin zu den Randseiten der Förderplatte. Vorzugsweise erstreckt sie sich von mittig nach randseitig verjüngend, insbesondere stufig verjüngend.

Damit stets eine ausreichende Materialstärke zwischen der Ausnehmung und den Zahngründen vorgesehen ist, ist gemäß einer Weiterbildung eine ausreichende Höhe oder Dicke der Förderplatte vorgesehen. Alternativ oder ergänzend ist eine nach randseitig zunehmende Verjüngung der Ausnehmung vorgesehen. Die Verjüngung setzt in genannter Richtung vorzugsweise vor dem oder zu dem ersten der Zahngründe an, der tiefer als die vorherigen eingebuchtet ist.

Vorzugsweise ist die Verjüngung in Abhängigkeit einer Tiefe der Zahngründe ausgebildet, wobei die Verjüngung an einer Position umso stärker ist, je tiefer ein zur Ausnehmung benachbarter Zahngrund ist.

Vorzugsweise ist die Verjüngung wechselweise stufig ausgebildet.

Insbesondere ist eine wechselweise Anordnung von Senken auf der Oberseite von der Verjüngung auf der Unterseite gespiegelt.

Alternativ oder ergänzend sind Querschnitte der Zahngründe und der Ausnehmung, die normal in eine Ebene parallel zur Oberseite oder Unterseite der Förderplatte projiziert sind, schnittfrei oder kreuzungsfrei.

Eine Förderkette, die kurvengängig ist, hat mehrere Kettenglieder, die jeweils nach wenigstens einem Aspekt der vorhergehenden Beschreibung ausgebildet sind, und deren Grundkettenglieder in wenigstens zwei Achsen gelenkig miteinander verbunden sind. Dabei sind die stirnseitigen Zähne der einen Förderplatte mit den rückseitigen Zahngründen der in Förderrichtung benachbart angeordneten Förderplatte in kurvengängigem Eingriff, wobei wenigstens die randseitigen der Zahngründe derart teilverfüllt sind, dass auch in einer Kurve ein menschlicher Eingriff zwischen zwei Förderplatten unmöglich ist.

Vorzugsweise sind die Stege derart bemessen, dass ein Spalt zwischen einem Zahn der Förderplatte und einem zugordneten Zahngrund der benachbarten Förderplatte in jedem Fall, das heißt bei gerader Förderung und bei Förderung in einer Kurve, kleiner als 5-10mm, vorzugsweise kleiner als 8mm, ist.

Ein Transfersystem hat eine Tragstruktur und eine daran geführte und in wenigstens zwei Achsen umgelenkten Förderkette, die gemäß wenigstens einem Aspekt der vorhergehenden Beschreibung ausgestaltet ist.

Ein bevorzugtes Ausführungsbeispiel der Erfindung wird im Folgenden anhand von Zeichnungen näher erläutert.

Es zeigen:
Figur 1 ein Transfersystem gemäß einem Ausführungsbeispiel mit einer kurvengängigen Förderkette, in perspektivischer Ansicht,
Figur 2 ein Kettenglied für eine kurvengängige Förderkette gemäß einem Ausführungsbeispiel, in perspektivischer Ansicht,
Figur 3 das Kettenglied gemäß Figur 1 in einer seitlichen Ansicht von oben,
Figur 4 eine kurvengängige Förderkette gemäß einem Ausführungsbeispiel mit Kettengliedern gemäß Figur 1 und 2, in einer Ansicht von oben,
Figur 5 die Förderkette gemäß Figur 3, in einer Ansicht von unten,
Figur 6 einen Abschnitt der Förderkette gemäß Figur 3 und 4 in einer perspektivischen Ansicht,
Figur 7 die Förderkette gemäß den Figuren 3 und 4 in einer Kurvenfahrt, in einer Ansicht von oben,
Figur 8 einen Randabschnitt des Kettengliedes gemäß Figur 1 und 2, in einer Ansicht von oben, und
Figur 9 das Kettenglied gemäß den Figuren 1, 2 und 6 in einem normal zur Querachse geführten Schnitt, in perspektivischer Darstellung, und

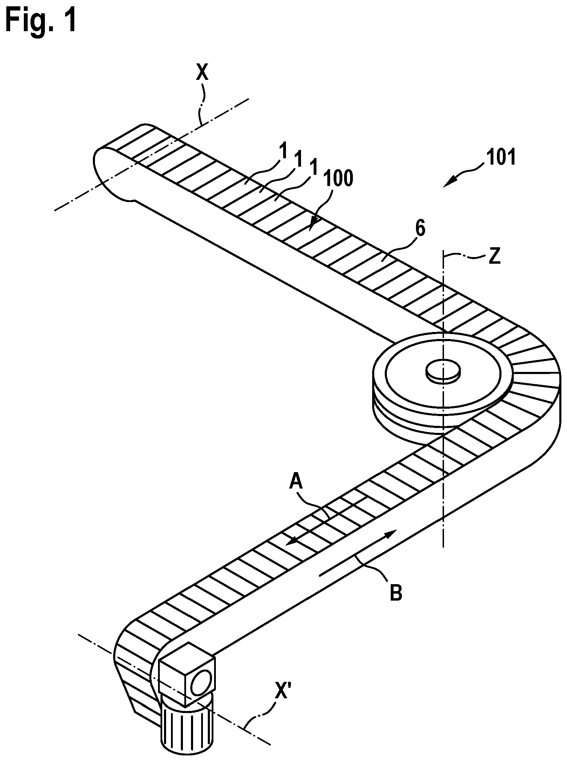

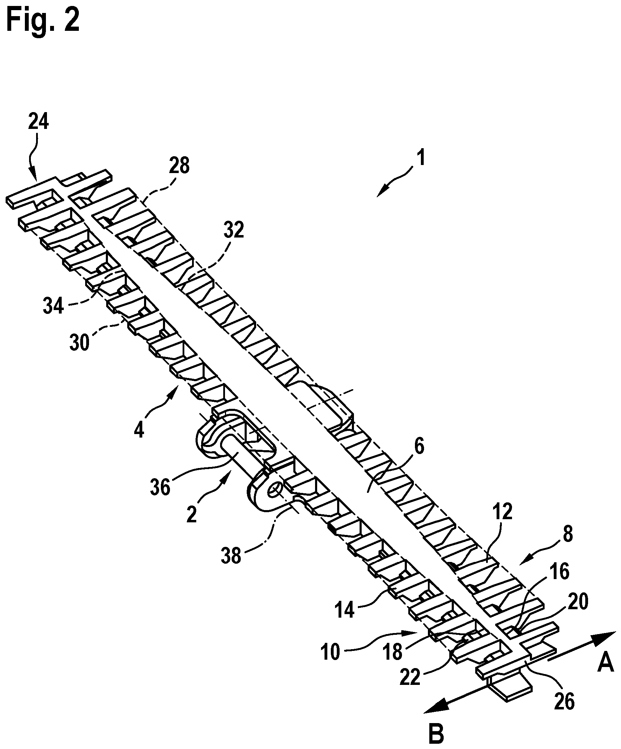

Figur 1 zeigt ein Transfersystem 101 gemäß einem Ausführungsbeispiel mit einer kurvengängigen Förderkette 100. Kettenglieder 1 der Förderkette 100 sind über ein jeweiliges Grundkettenglied (nicht dargestellt, vergleiche 2, Figur 2 ff.) derart gelenkig gekoppelt, dass die Förderkette 100 um Achsen X, X' und Z umlenkbar ist. Die Achsen X und X' sind mit Bezug zur Förderkette 100 gleichwirkend und bewirken deren Umlenkung an Umkehrpunkten des Transfersystems 101. Die Achse Z ist eine Mittelachse eines Kurvenmittelpunktes des Transfersystems 101 und bewirkt die Umlenkung der Förderkette 100 in einer Förderebene. Eine Oberseite 6 der Kettenglieder 1 bewegt sich im Betrieb in Förderrichtung A. In Gegenrichtung B wird die Förderkette 100 unterseitig am Transfersystem 101 zurückgeführt. Auf weitere Erläuterungen zum Aufbau des Transfersystems 101 wird an dieser Stelle verzichtet, da ein solcher, beispielsweise vom System *Vario Flow Plus* der Anmelderin, hinreichend bekannt ist.

Figur 2 zeigt eines der Kettenglieder 1 in perspektivischer Ansicht. Das Kettenglied 1 hat ein Grundkettenglied 2, an dem oberseitig eine Förderplatte 4 angeordnet, insbesondere verrastet ist. Das Grundkettenglied 2 dient der Kopplung der Kettenglieder 1 zur Ausbildung der Förderkette 100. Der Aufbau eines solchen Grundkettengliedes 2 ist hinreichend aus dem Stand der Technik bekannt, insbesondere aus der Patentschrift EP 2 750 993 B1, die auf der Anmelderin zurückgeht. Zum Zwecke der Offenbarung wird auf diese Schrift verwiesen.

Das mit der Förderplatte 4 ausgebildete Kettenglied 1 hat die Aufgabe, die kurvengängige Förderung bei gleichzeitig großer Stabilität und hoher Prozesssicherheit, insbesondere Sicherheit gegen den Eingriff eines Menschen in bestehende Zwischenräume, zu ermöglichen. Diese Aufgabe wird durch die offenbarungsgemäße, geometrische Ausgestaltung der Förderplatte 4 ermöglicht, die im Folgenden beschrieben wird.

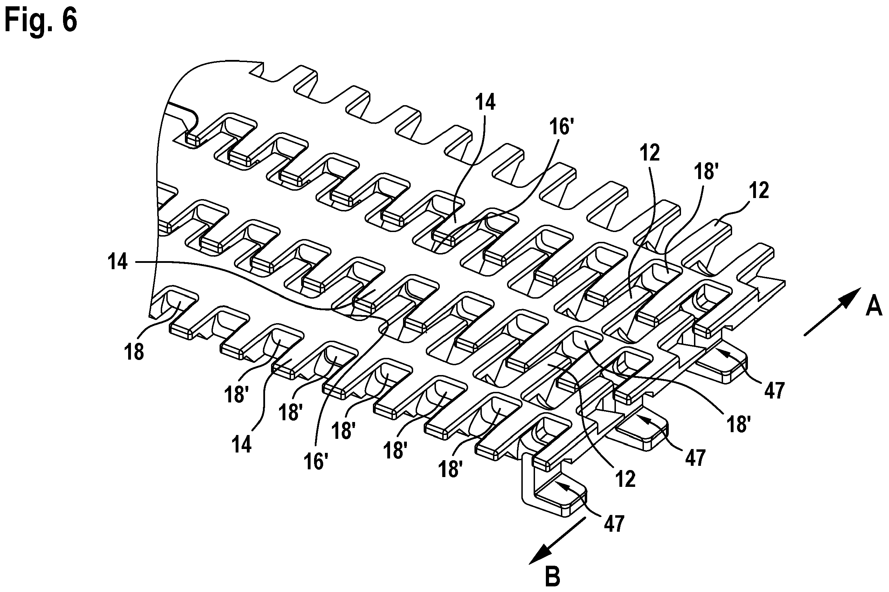

Demgemäß hat die Förderplatte 4 gemäß Figur 2 an einer Stirnseite 8, beidseitig des Grundkettengliedes 2, eine Reihe von Zähnen 12, zwischen denen sich Zahngründe 16 absenken. In Analogie dazu, an einer Rückseite 10 der Förderplatte 4, ist eine Reihe von Zähnen 14 mit entsprechenden Zahngründen 18 ausgebildet. Eine Länge oder Erstreckung der Zähne 12, 14 nimmt mit zunehmendem Abstand vom Grundkettenglied 2, in Richtung hin zu Randseiten 24, 26 zu. Die Länge ist als Erhebung von Köpfen der Zähne 12, 14 über den jeweils benachbarten Zahngrund 16, 18 bemessen. Um die Figur 2 nicht zu überfrachten, wurde darauf verzichtet, alle Zahngründe und Zähne mit ein Bezugszeichen zu versehen. Der einfacheren Darstellung halber wurde auf die Darstellung von Verrundungen verzichtet. Hierzu sei auf Figur 6 verwiesen.

Aus Figur 2 wird ersichtlich, dass offenbarungsgemäß randseitigere der Zahngründe 16, 18 mit einem Steg 20, 22 teilverfüllt sind. Auf diese Weise sind zwar sehr tiefe Zahngründe 16, 18 möglich - was unmittelbar Einfluss auf den erreichbaren Knickwinkel der Kettenglieder und die Kurvengängigkeit hat - gleichzeitig werden über die Stege 20, 22 die benachbarten Zähne 12, 14 stabilisiert und ein menschlicher Eingriff in den Zahngrund 16, 18, beispielsweise mit einem einzelnen Finger, kann verhindert werden.

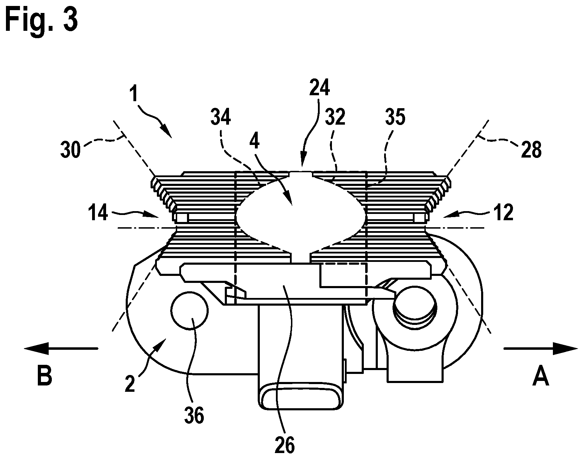

Figur 3 zeigt das Kettenglied 1 gemäß Figur 2 in einer seitlichen Ansicht von oben, wobei der Blick von der in Förderrichtung A rechten Randseite 26 über die Förderplatte 4 hinweg, zur anderen Randseite 24 fällt. Hierbei ist gut zu erkennen, das eine jeweilige Kopflinie 28, 30 der stirnseitigen Zähne 12 und der rückseitigen Zähne 14 mit Bezug zur Förderrichtung A, beziehungsweise zur Gegenrichtung B, eine im wesentlichen konkave

Form aufweist (vgl. auch Fig. 2). Die "gedachte" Kopflinie 28, beziehungsweise 30, verbindet die Köpfe, jeweils der stirnseitigen Zähne 12, beziehungsweise der rückseitigen Zähne 14. Durch die von oben sehr flache Seitenansicht gemäß Figur 2 erscheinen die beiden Kopflinien 28, 30 stark gekrümmt und ihr konkaver Charakter wird im Vergleich zu Figur 2 deutlicher. Auffällig ist dabei, dass die Kopflinien 28, 30 jeweils aus drei Geraden zusammengesetzt sind, je einer mittigen Geraden und je zwei davon abgewinkelten, randseitigen Geraden. Randseitigere der Zähne 12, 14 kragen demgemäß aus der Förderplatte 4 länger aus, als Zähne 12, 14, die im Bereich des Grundkettengliedes 2 oder im Bereich einer Mitte der Förderplatte 4 angeordnet sind.

Des weiteren offenbart Figur 3, wie auch Figur 2, dass die stirnseitigen Zahngründe 16 entlang einer Grundlinie 32 und die rückseitigen Zahngründe 18 entlang einer Grundlinie 34 angeordnet sind, welche sich ebenfalls nicht gerade erstrecken. Stattdessen ergeben beide Grundlinien 32, 34 eine flache Ausbauchung in Förderrichtung A und in Gegenrichtung B, im Sinne einer Linsenkontur.

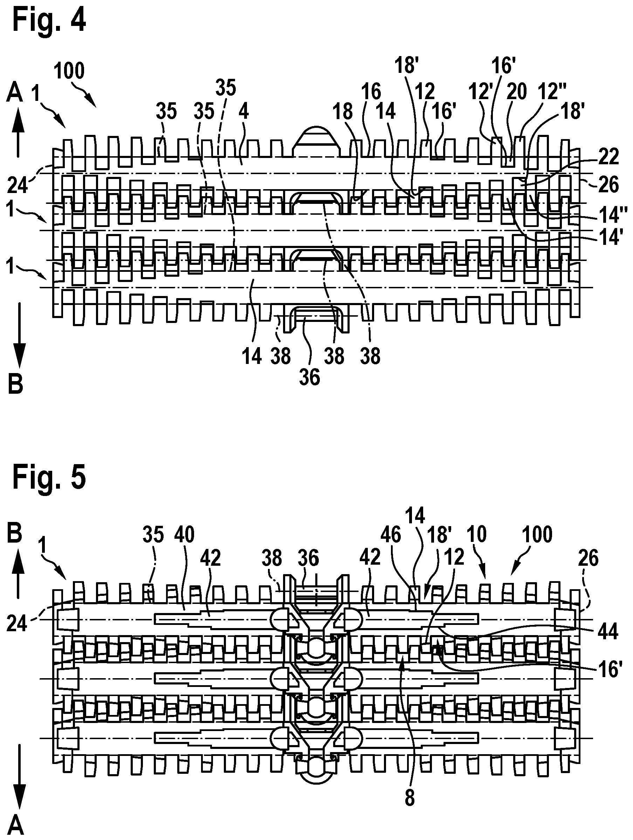

Figur 4 zeigt drei gleiche Kettenglieder 1, die über die Grundkettenglieder 2 zu einem Abschnitt der Förderkette 100 gekoppelt sind. Zur Kopplung weist das jeweilige Grundkettenglied 2 einen rückseitig angeordneten Querbolzen 36 und eine stirnseitig angeordnete Bolzenaufnahme (nicht näher dargestellt) auf. Die Bolzenaufnahme des in der Förderkette 100 in Gegenrichtung B jeweils rückseitig benachbarten Kettengliedes 1 ist mit dem Querbolzen 36 des in Förderrichtung A angeordneten Kettengliedes 1 derart gekoppelt, dass die beiden Kettenglieder 1 um die Bolzenlängsachse 38 und um eine mit Bezug zur Förderrichtung A ausgebildete Hochachse des Querbolzens 36, schwenkbar sind. Über die Bolzenlängsachse 38 ist die Umlenkung der Förderkette 100 an den Umkehrpunkten und über die Hochachse die kurvengängige Umlenkung der Förderkette 100 in Kurven des Transfersystems 101 gewährleistet. Diese zweiachsige Kopplung ist aus der oben genannten, auf die Anmelderin zurückgehenden Patentschrift EP 2 750 993 B1 bereits hinreichend bekannt, sodass auf diese an dieser Stelle zum Zwecke der Offenbarung verwiesen sei.

Gemäß Figur 4 sind stirnseitige, in Förderrichtung A weisende Zahngründe 16 und rückseitige, in Gegenrichtung B weisende Zahngründe 18, die jeweils nahe am Grundkettenglied 2 angeordnet sind, unverfüllt, das heißt, sie weisen keinen Steg auf. Stirnseitig, sowie rückseitig, weist im gezeigten Ausführungsbeispiel jeweils erst der vierte Zahngrund 16', 18' eine Teilverfüllung mittels einem Steg auf. Ab dieser Position buchten die Zahngründe 16', 18' in Richtung hin zur Randseite 26 zunehmend tief in die Förderplatte 4 ein und sind mittels der Stege 20, 22 teilverfüllt. Auf diese Weise sind zum einen die den Zahngrund 16', 18' bildenden, vergleichsweise langen Zähne 12', 12", 14', 14" stabilisiert, und zum anderen wird gewährleistet, dass ein vom Zahngrund 16', 18' gebildeter Spalt auch in den Kurven limitiert ist.

Die Teilverfüllung ist so ausgestaltet, dass die unverfüllten Zahngründe 16, 18 zusammen mit Scheitelpunkten der Stege 20, 22 mit Bezug zur Förderebene einen etwa rechteckigen Querschnitt eines quaderförmigen Kernabschnitts 35 der Förderplatte 4 ausbilden, was in Figur 4 durch das jeweils gestrichelte Rechteck 35 für jede Förderplatte 4 verdeutlicht wird (vergleiche auch Figur 3). In Förderrichtung A, mittig zwischen diesen rechteckigen Querschnitten 35, ist die jeweilige Bolzenlängsachse 38 angeordnet. Koinzident mit der Bolzenlängsachse 38 erstreckt sich eine von den Zähnen 12, 14 gebildete Eingriffslinie der Zahne 12, 14 zwischen den Förderplatten 4, was gemäß Figur 4 durch die strichpunktierte Linie im Bereich zwischen den Zähne 12, 14 zweier benachbarter Förderplatten 4 verdeutlicht wird.

Der oben genannte Spalt stellt sich gemäß Figur 4 einerseits zwischen den stirnseitigen Zähnen 12, 12', 12" und den rückseitigen, unverfüllten Zahngründen 18, sowie den rückseitigen Stegen 22, und andererseits zwischen den rückseitigen Zähnen 14, 14', 14" und den stirnseitigen, unverfüllten Zahngründen 16, sowie den stirnseitigen Stegen 20 ein. Die Stege 20 und 22 tragen dabei randseitig zur Limitierung des Spaltes bei, was etwas weiter unten anhand Figur 6 verdeutlicht werden soll.

Figur 5 zeigt den Abschnitt der Förderkette 100 gemäß Figur 4 in einer Ansicht von unten. An einer Unterseite 40 der jeweiligen Förderplatte 4 ist, ausgehend vom Grundkettenglied 2 und hin zu den jeweiligen Randseiten 24, 26, eine Tasche oder Ausnehmung 42 ausgebildet, die hin zu den Randseiten 24, 26 stufig verjüngt ist. Eine stirnseitig erste Verjüngungsstufe 44 ist auf Höhe des stirnseitig ersten, teilverfüllten Zahngrundes 16' angeordnet und eine rückseitig erste Verjüngungsstufe 46 ist auf Höhe des rückseitig ersten teilverfüllten Zahngrundes 18' angeordnet (vergleiche auch Figur 4). Auf diese Weise wird mittels der Ausnehmung 42 Material eingespart, wobei die Verjüngungen 44, 46 dazu beitragen, dass ein Mindestabstand der Ausnehmung 42 zu den Zahngründen 16', 18' eingehalten wird und die Förderplatte 4 keine unnötige Schwächung erfährt.

Gemäß Figur 6 weisen die Förderplatten 4 an beiden Randseiten 24, 26 jeweils eine randseitige Führungseinrichtung 47. Im gezeigten Ausführungsbeispiel sind zu diesem Zweck unterseitig auskragende, nach außen abgestellte L-Profile 47 vorgesehen, die mit der Unterseite der Förderplatte 4 eine nach außen weisende Nut ausbilden, die eine Gleit- und Führungsleiste der Tragstruktur des Transfersystems 101 umfassen kann. Alle Kanten der Förderplatte 4 sind gemäß Figur 6 verrundet, sodass das Risiko einer Beschädigung des Gutes, einer Verletzung von Bedienpersonal und eines Verhakens der Förderplatten 4 untereinander minimiert ist.

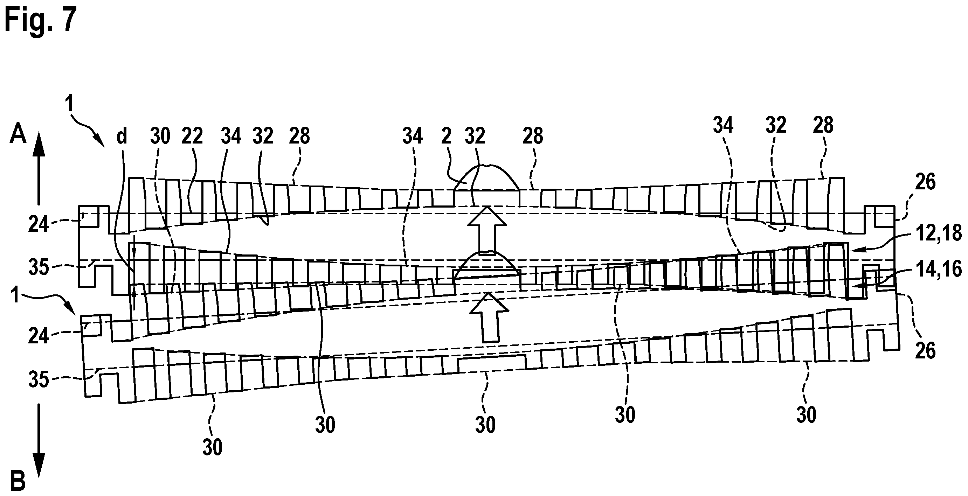

Figur 7 zeigt einen Abschnitt der Förderkette 100 gemäß den Figuren 4 bis 6 in einer Kurvenfahrt. In der Kurve sind die Kettenglieder 1 mit einem vom Kurvenradius abhängigen Knickwinkel gegeneinander angestellt. Die in Figur 7 gezeigte Konstellation zeigt dabei den maximal möglichen Knickwinkel, beziehungsweise den kleinstmöglichen Kurvenradius. Die Randseiten 26 sind auf der Innenseite, die Randseiten 24 auf Außenseite der Kurve angeordnet. Kurveninnenseitig, diesseits der Grundkettenglieder 2, fahren die stirnseitigen Zähne 12 des in Förderrichtung A nacheilenden Kettenglieds 1 vollständig in die rückseitigen Zahngründe 18 des in Förderrichtung A vorauseilenden Kettengliedes 1 ein und die rückseitigen Zähne 14 des in Förderrichtung A vorauseilenden Kettenglieds 1 fahren vollständig in die stirnseitigen Zahngründe 16 des in Förderrichtung A nacheilenden Kettengliedes 1 ein. Kurvenaußenseitig, jenseits des Grundkettengliedes 2, sind die beiden sich gegenüberstehenden Zahnreihen 12, 14 ausgerückt sind und kämmen nur im Scheitelbereich der Zahnköpfe. In dieser Kurvenkonstellation resultiert kurvenaußenseitig am randseitigsten der mit einem gegenüberliegenden Zahn in Eingriff befindlichen Zahngrund der größtmögliche Spalt d, der, wie weiter oben bereits erwähnt, mittels des jeweiligen Steges 22 limitiert ist. Im Falle des Ausführungsbeispiels ist der Spalt auf 8mm limitiert, sodass der Eingriff eines menschlichen Fingers in den Spalt d verhindert ist.

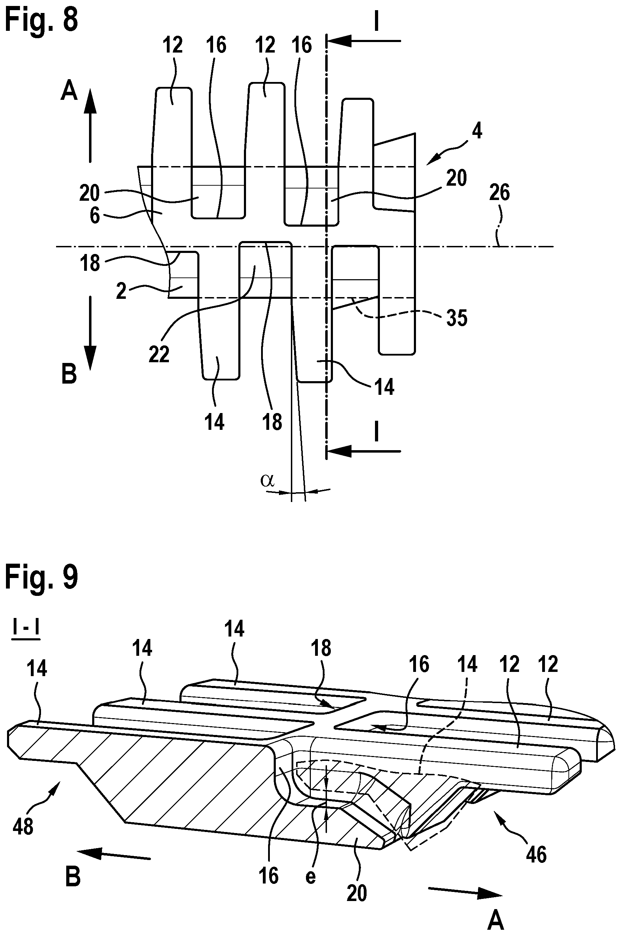

Figur 8 zeigt ein Detail der Förderplatte 4 im Bereich der Randseite 26. Gut zu erkennen ist, dass in einer Richtung hin zur Randseite 26 die Zähne 12 stirnseitig und die Zähne 14 rückseitig eine zunehmende Länge aufweisen, wohingegen die Stege 20 (stirnseitig) und Stege 22 (rückseitig) mit ihren Scheiteln exakt auf der Kontur des Kernabschnitt 35 liegen, also zwischen den Köpfen der Zähne 12, 14 und den Zahngründen 16, 18.

Um ein Einscheren der Zähne in den jeweiligen Zahngrund in einer Kurvenfahrt kollisionsfrei zu ermöglichen, sind im gezeigten Ausführungsbeispiel hin zum Grundkettenglied 2 weisende Randseiten der Zähne 12, 14 mit einem gleichen Winkel α gegen die Förderrichtung A abgewinkelt.

Der Winkel α beträgt im gezeigten Ausführungsbeispiel 10°. Er ist insbesondere abhängig von einem maximal vorgesehenen Knickwinkel zwischen den Kettengliedern 1

In Figur 8 ist des Weiteren ein Schnitt I - I definiert, der in einer Ebene angeordnet ist, die von der Förderrichtung A und einer normal zur Oberseite 6 ausgerichteten Hochachse der Förderplatte 4 aufgespannt ist, und der in Figur 9 näher erläutert wird.

Gemäß Figur 9 ist die Förderplatte 4 im Bereich des längsten und randseitigsten der rückseitigen Zähne 14 und dem ihm gegenüber angeordneten, stirnseitigen Steg 20 gemäß der Schnittebene I - I geschnitten dargestellt. Der Steg 20 teilverfüllt den Zahngrund 16 derart, dass oberhalb des Steges 20 eine Senke in der Oberseite 6 ausgebildet ist, in die wiederum der rückseitige Zahn 14 des in Förderrichtung A vorauseilenden Kettengliedes 1 eintauchen kann. Das wird in Figur 9 durch die angedeutete Schnittkontur des Zahnes 14 oberhalb des Steges 20 verdeutlicht. Die Zähne 14 haben jeweils zu dem ihnen zugeordneten Steg 20 einen Abstand e, über den sichergestellt ist, dass der Zahn 14 nicht auf den Steg 20 aufläuft. Gleiches gilt natürlich für die Zähne 12 mit Bezug zu den Stegen 22.

Wie aus Figur 9 auch hervorgeht, weisen die Zähne 12, beziehungsweise 14, unterseitig jeweils eine Aussparung 46, beziehungsweise 48 auf, die bezüglich ihres Querschnitts im Wesentlichen komplementär zum Querschnitt des Steges 20, beziehungsweise 22 ist.

Offenbart ist ein kurvengängiges Kettenglied für eine oder einer kurvengängigen Förderkette eines Transfersystems, wobei das Kettenglied bezogen auf eine Förderrichtung stirnseitig und rückseitig über Zahngründe beabstandete Zähne hat, die zum kämmenden Eingriff von in der Förderkette benachbarten Kettengliedern vorgesehen und ausgestaltet sind. Wenigstens ein randseitiger der stirnseitigen und der rückseitigen Zahngründe ist von einem Steg derart teilverfüllt, dass vom Steg in einer Oberseite oder in einer Unterseite des Kettengliedes eine Senke ausgebildet ist, wobei sich ein Scheitel des Steges zwischen einer Kopflinie der Zähne und einer Grundlinie der Zahngründe erstreckt.

Offenbart sind zudem eine Förderkette mit einer Vielzahl derartiger Kettengliedern, die jeweils miteinander um wenigstens 2 Achsen schwenkbar gekoppelt sind. Offenbart ist zudem ein Transfersystem mit einer Tragstruktur, an der eine derartige Förderkette geführt und umgelenkt ist.

## Patentansprüche

1. Kettenglied (1) für eine kurvengängige Förderkette (100) oder einer kurvengängigen Förderkette (100) für ein oder eines Transfersystems (101), mit einem Grundkettenglied (2), das zur Kopplung mit anderen Grundkettengliedern (2) der Förderkette (100) vorgesehen und ausgestaltet ist, und an dem eine Förderplatte (4) angeordnet oder einstückig ausgebildet ist, die vorgesehen und ausgestaltet ist, an ihrer Oberseite (6) ein zu förderndes Gut zu stützen, und an deren Stirnseite (8) in Förderrichtung (A) Zähne (12) und Rückseite (10) in Gegenrichtung (B) Zähne (14) auskragen, die ausgestaltet und angeordnet sind, zwischen in der Förderkette (100) benachbart anordenbaren Förderplatten (4) einen verzahnten, kurvengängigen Eingriff auszubilden, wobei sowohl an der Stirnseite (8), als auch an der Rückseite (10) wenigstens ein, mit Bezug zur Förderrichtung (A) randseitiger Zahngrund (16, 18) von einem Steg (20, 22) zumindest teilverfüllt ist, wobei vom Steg (20, 22) eine Senke in der Oberseite (6) ausgebildet ist, oder wobei vom Steg eine Senke in einer Unterseite der Förderplatte ausgebildet ist, wobei an wenigstens einem der Zähne (12, 14) eine unterseitige Aussparung (46, 48) ausgebildet ist, oder wobei an wenigstens einem der Zähne eine oberseitige Aussparung ausgebildet ist, **dadurch gekennzeichnet, dass** die wenigstens eine Senke und die mit dieser in Förderrichtung fluchtende, wenigstens eine Aussparung (46, 48) im Wesentlichen komplementär ausgebildet sind.

2. Kettenglied (1) zumindest nach Anspruch 1, wobei die wenigstens eine Senke und/oder die wenigstens eine Aussparung (46, 48) wenigstens eine Entformschräge in Förderrichtung und/oder in Gegenrichtung aufweisen.

3. Kettenglied (1) nach einem der vorhergehenden Ansprüche, wobei in einer Ebene, die parallel zur Oberseite (6) oder parallel zu einer Unterseite (40) der Förderplatte (4) ist, von Scheitelpunkten oder -linien der Stege (20, 22) Abschnitte einer rechteckigen Kontur (35) gebildet sind.

4. Kettenglied (1) nach einem der vorhergehenden Ansprüche, wobei wenigstens ein mittig oder mittiger angeordneter der Zahngründe (16, 18) unverfüllt ist.

5. Kettenglied (1) nach Anspruch 3 und 4, wobei vom wenigstens einen unverfüllten Zahngrund ein Abschnitt der rechteckigen Kontur (35) gebildet ist.

6. Kettenglied (1) nach einem der vorhergehenden Ansprüche, wobei die Förderplatte (4) einen Kernabschnitt mit quaderförmiger Grundform (35) hat, aus dem die Zähne (12, 14) oder zumindest Zahnabschnitte auskragen und in den die Zahngründe (20, 22) einbuchten.

7. Kettenglied (1) nach Anspruch 6, wobei der Kernabschnitt in Förderrichtung (A) und/oder in Gegenrichtung (B) abschnittsweise von Scheitelpunkten oder -linien der Stege (20, 22) und/oder von unverfüllten Zahngründen begrenzt ist.

8. Kettenglied (1) nach einem der vorhergehenden Ansprüche, wobei von Scheitelpunkten oder -linien der Stege (20, 22) und/oder unverfüllten Zahngründen (16, 18) Abschnitte oder Punkte einer Geraden (35) ausgebildet sind.

9. Kettenglied (1) nach einem der vorhergehenden Ansprüche, wobei eine stirnseitige Kopflinie (28), entlang der Köpfe der stirnseitigen Zähne (12) angeordnet sind, in Förderrichtung (A) konkav ausgebildet ist, und/oder wobei eine rückseitige Kopflinie (30), entlang der Köpfe der rückseitigen Zähne (14) angeordnet sind, in Gegenrichtung (B) konkav ausgebildet ist.

10. Förderkette (100), die kurvengängig ist, mit Kettengliedern (1), die jeweils nach einem der vorhergehenden Ansprüchen ausgebildet sind, wobei deren Grundkettenglieder (2) in wenigstens zwei Achsen (38) gelenkig miteinander verbunden sind.

11. Transfersystem (101) mit einer Tragstruktur und einer daran geführten und in wenigstens zwei Achsen (X, X', Y) umgelenkten Förderkette (100), die gemäß Anspruch 10 ausgebildet ist.

## Claims

1. Chain link (1) for a curve-going conveyor chain (100) or a curve-going conveyor chain (100) for one or a transfer system (101), with a base chain link (2) which is provided and designed for coupling with other base chain links (2) of the conveyor chain (100), and on which a conveyor plate (4) is arranged or integrally formed, which is provided and designed to support a good to be conveyed on its upper side (6), and on the front side (8) of which in the conveying direction (A) teeth (12) and on the rear side (10) of which in the counter-direction (B) teeth (14) project, which are designed and arranged to form a toothed, curve-going engagement between conveyor plates (4) which can be arranged adjacently in the conveyor chain (100), wherein both on the front side (8) and on the rear side (10) at least one tooth root (16, 18) which is peripheral with respect to the conveying direction (A) is at least partially filled by a web (20, 22), wherein a depression is formed by the web (20, 22) in the upper side (6), or wherein a depression is formed by the web in a lower side of the conveyor plate, wherein on at least one of the teeth (12, 14) a lower-side recess (46, 48) is formed, or wherein on at least one of the teeth an upper-side recess is formed, **characterized in that** the at least one depression and the at least one recess (46, 48) which is aligned with the depression in the conveying direction are of essentially complementary design.

2. Chain link (1) at least according to claim 1, wherein the at least one depression and/or the at least one recess (46, 48) have at least one mould release slope in the conveying direction and/or in the counter-direction.

3. Chain link (1) according to one of the preceding claims, wherein, in a plane which is parallel to the upper side (6) or parallel to a lower side (40) of the conveyor plate (4), sections of a rectangular contour (35) are formed by vertices or vertex lines of the webs (20, 22).

4. Chain link (1) according to one of the preceding claims, wherein at least one centrally or more centrally arranged of the tooth roots (16, 18) is unfilled.

5. Chain link (1) according to claims 3 and 4, wherein a section of the rectangular contour (35) is formed by the at least one unfilled tooth root.

6. Chain link (1) according to one of the preceding claims, wherein the conveyor plate (4) has a core section with a cuboidal basic shape (35), from which the teeth (12, 14) or at least tooth sections project and in which the tooth roots (20, 22) are indented.

7. Chain link (1) according to claim 6, wherein the core section is delimited in sections in the conveying direction (A) and/or in the counter-direction (B) by vertices or vertex lines of the webs (20, 22) and/or by unfilled tooth roots.

8. Chain link (1) according to one of the preceding claims, wherein sections or points of a straight line (35) are formed by vertices or vertex lines of the webs (20, 22) and/or unfilled tooth roots (16, 18).

9. Chain link (1) according to one of the preceding claims, wherein a front-side tip line (28), which is arranged along the tips of the front-side teeth (12), is of concave design in the conveying direction (A), and/or wherein a rear-side tip line (30), which is arranged along the tips of the rear-side teeth (14), is of concave design in the counter-direction (B).

10. Conveyor chain (100) which is curve-going, with chain links (1), which are each designed according to one of the preceding claims, wherein their base chain links (2) are connected to one another so as to be articulated about at least two axes (38).

11. Transfer system (101) with a support structure and a conveyor chain (100) which is guided thereon and deflected in at least two axes (X, X', Y) and which is designed according to claim 10.

## Revendications

1. Maillon de chaîne (1) pour une chaîne transporteuse (100) apte à décrire des courbes ou une chaîne transporteuse (100) apte à décrire des courbes pour un ou un système de transfert (101), avec un maillon de chaîne de base (2) qui est prévu et conçu pour être couplé à d'autres maillons de chaîne de base (2) de la chaîne transporteuse (100), et sur lequel une plaque transporteuse (4) est agencée ou réalisée d'une seule pièce, qui est prévue et conçue pour supporter un produit à transporter sur sa face supérieure (6), et sur la face frontale (8) de laquelle, dans la direction de transport (A), des dents (12) et sur la face arrière (10) de laquelle, dans la direction opposée (B), des dents (14) font saillie, qui sont conçues et agencées pour former un engrènement denté apte à décrire des courbes entre des plaques transporteuses (4) pouvant être agencées de manière adjacente dans la chaîne transporteuse (100), dans lequel, tant sur la face frontale (8) que sur la face arrière (10), au moins un fond de dent (16, 18) latéral par rapport à la direction de transport (A) est au moins partiellement rempli par une barrette (20, 22), dans lequel une dépression est formée par la barrette (20, 22) dans la face supérieure (6), ou dans lequel une dépression est formée par la barrette dans une face inférieure de la plaque transporteuse, dans lequel sur au moins une des dents (12, 14) un évidement (46, 48) côté inférieur est formé, ou dans lequel sur au moins une des dents un évidement côté supérieur est formé, **caractérisé en ce que** l'au moins une dépression et l'au moins un évidement (46, 48) aligné avec celle-ci dans la direction de transport sont réalisés de manière essentiellement complémentaire.

2. Maillon de chaîne (1) au moins selon la revendication 1, dans lequel l'au moins une dépression et/ou l'au moins un évidement (46, 48) présentent au moins une pente de démoulage dans la direction de transport et/ou dans la direction opposée.

3. Maillon de chaîne (1) selon l'une des revendications précédentes, dans lequel, dans un plan qui est parallèle à la face supérieure (6) ou parallèle à une face inférieure (40) de la plaque transporteuse (4), des sections d'un contour rectangulaire (35) sont formées par des sommets ou des lignes de sommet des barrettes (20, 22).

4. Maillon de chaîne (1) selon l'une des revendications précédentes, dans lequel au moins un des fonds de dent (16, 18) disposé au centre ou de manière plus centrale n'est pas rempli.

5. Maillon de chaîne (1) selon les revendications 3 et 4, dans lequel une section du contour rectangulaire (35) est formée par l'au moins un fond de dent non rempli.

6. Maillon de chaîne (1) selon l'une des revendications précédentes, dans lequel la plaque transporteuse (4) présente une section centrale de forme de base parallélépipédique (35), à partir de laquelle les dents (12, 14) ou au moins des sections de dent font saillie et dans laquelle les fonds de dent (20, 22) sont en creux.

7. Maillon de chaîne (1) selon la revendication 6, dans lequel la section centrale est délimitée par sections dans la direction de transport (A) et/ou dans la direction opposée (B) par des sommets ou des lignes de sommet des barrettes (20, 22) et/ou par des fonds de dent non remplis.

8. Maillon de chaîne (1) selon l'une des revendications précédentes, dans lequel des sections ou des points d'une droite (35) sont formés par des sommets ou des lignes de sommet des barrettes (20, 22) et/ou des fonds de dent (16, 18) non remplis.

9. Maillon de chaîne (1) selon l'une des revendications précédentes, dans lequel une ligne de tête (28) côté frontal, agencée le long des têtes des dents (12) côté frontal, est de forme concave dans la direction de transport (A), et/ou dans lequel une ligne de tête (30) côté arrière, agencée le long des têtes des dents (14) côté arrière, est de forme concave dans la direction opposée (B).

10. Chaîne transporteuse (100) apte à décrire des courbes, avec des maillons de chaîne (1) qui sont respectivement conçus selon l'une des revendications précédentes, dans laquelle leurs maillons de chaîne de base (2) sont reliés les uns aux autres de manière articulée autour d'au moins deux axes (38).

11. Système de transfert (101) avec une structure de support et une chaîne transporteuse (100) guidée sur celle-ci et déviée selon au moins deux axes (X, X', Y), qui est conçue selon la revendication 10.
